# EUROPEAN PATENT APPLICATION

(11) **EP 4 570 090 A1**
(43) Date of publication of application: **18.06.2025**
(21) Application number: 24212893.2
(22) Date of filing: 14.11.2024
(51) Int. Cl.: A24F 40/40, A24F 40/10, H01M 50/247, H01M 50/253, H01M 50/264

(54) **BATTERY ASSEMBLY AND ELECTRONIC ATOMIZATION DEVICE**

(30) Priority: 15.11.2023 CN 202323090516 U
(71) Applicant: Smoore International Holdings Limited, George Town, Grand Cayman, KY1-1111 (KY)
(72) Inventor: PENG, Fei, Shenzhen (CN)
(74) Representative: Westphal, Mussgnug & Partner, Patentanwälte mbB

(57) **Abstract**

The present disclosure relates to the field of electronic atomization technologies, and in particular, to a battery assembly and an electronic atomization device. The battery assembly includes a holder configured to mount a battery core, a battery protection tube, and a bottom cover located on one end of the battery protection tube. The battery protection tube is sleeved on the holder and covers the battery core, a first buckle part is arranged on the bottom cover, and a second buckle part configured to the first buckle part is arranged on the holder. The bottom cover is rotatable relative to the holder, so that the first buckle part is in a buckle connection with the second buckle part, or the first buckle part is separated from the second buckle part. In the present disclosure, the bottom cover is detachably connected to the holder, the battery core can be removed, and the bottom cover can be switched between a locked state and an unlocked state provided that the bottom cover is rotated manually, thereby improving convenience of removal.

## Description

### FIELD

The present disclosure relates to the field of electronic atomization technologies, and specifically, to a battery assembly and an electronic atomization device.

### BACKGROUND

An electronic atomization device generally includes key components such as a battery, a circuit board, and a heating element. Battery cores in the components generally include valuable materials such as lithium, cobalt, and nickel. This means that these valuable resources may be wasted or cannot be recovered when the electronic atomization device is discarded. In addition, if the discarded electronic atomization device is treated properly, harmful substances in the battery may pollute soil and water sources.

With increasing global awareness of sustainability and environmental protection, countries and regions have formulated a series of environmental regulations and policies to reduce adverse environmental impacts of discarded electronic products. As one of the environmental regulations and policies, the European Environmental Protection Act defines requirements for easy disassembling of electronic products with battery cores for consumers. A core objective of this initiative is to promote sustainable lifecycle management of the electronic products and reduce the burden of discarded electronic devices on an environment.

However, existing disposable electronic atomization devices do not have a quick-disassembling function of a battery core. Generally, a battery housing can be decomposed only through a professional means, and then a battery core is taken out, which causes inconvenience for subsequent classification and recovery of the battery core.

### SUMMARY

An objective of embodiments of this application is to provide a battery assembly, to resolve a problem of how to improve convenience of removing a battery core.

To achieve the above objective, this application adopts the following technical solutions.

According to a first aspect, a battery assembly is provided, configured to mount a battery core. The battery assembly includes a holder configured to mount the battery core, a battery protection tube, and a bottom cover located on one end of the battery protection tube, the battery protection tube is sleeved on the holder and covers the battery core, a first buckle part is arranged on the bottom cover, and a second buckle part configured to the first buckle part is arranged on the holder. The bottom cover is rotatable relative to the holder, so that the first buckle part is in a buckle connection with the second buckle part, or the first buckle part is separated from the second buckle part.

In some embodiments, one of the first buckle part and the second buckle part is a buckle head, and another of the first buckle part and the second buckle part is a buckle groove configured to the buckle head.

In some embodiments, the first buckle part is the buckle head protruding on the bottom cover, the second buckle part is the buckle groove provided on the holder, the buckle groove includes a first groove section provided in an axial direction of the battery protection tube and a second groove section in communication with the first groove section and provided in a circumferential direction of the battery protection tube, and the first groove section is configured to guide the buckle head to be buckled to the second groove section.

In some embodiments, a rotating buckle further protrudes on a groove wall of the second groove section, and the first buckle part is clamped between the rotating buckle and the groove wall of the second groove section.

In some embodiments, an adjustment cavity is provided on the holder, and the first buckle part and the second buckle part are located in a circumferential direction of the adjustment cavity. A plurality of air inlet holes are provided on a bottom wall of the adjustment cavity, the battery assembly further includes an adjustment base located in the adjustment cavity, and the adjustment base is configured to rotate by a first predetermined angle relative to the holder to expose at least one of the air inlet holes, or the adjustment base is configured to rotate by a second predetermined angle relative to the holder to block all of the air inlet holes.

In some embodiments, cross-sectional areas of each air inlet hole are all different.

In some embodiments, an accommodating cavity and a microphone located in the accommodating cavity are further provided on the holder, the accommodating cavity and the adjustment cavity are provided oppositely, a vent hole is further provided on the bottom wall of the adjustment cavity, and two ends of the vent hole are in communication with the adjustment cavity and the accommodating cavity respectively. The adjustment base is configured to rotate by the first predetermined angle relative to the holder to expose at least one of the air inlet holes, and the adjustment base does not block the vent hole, or the adjustment base is configured to rotate by the second predetermined angle relative to the holder to block each air inlet hole and the vent hole.

In some embodiments, a positioning through hole running through two side end surfaces of the bottom cover is provided on the bottom cover, and the adjustment base is at least partially rotatably arranged in the positioning through hole. An air inlet through hole in communication with an external space is provided on the adjustment base, an air inlet groove is provided on a surface of the adjustment base facing the air inlet hole, and the air inlet through hole is in communication with the air inlet groove. The adjustment base is configured to rotate by a predetermined angle relative to the bottom cover for at most one of the air inlet holes and the vent hole to be in communication with the air inlet groove.

In some embodiments, an atomization cavity and a battery cavity configured to mount the battery core are further provided on the holder, the atomization cavity and the adjustment cavity are respectively located on two ends of the holder, the battery cavity is located between the atomization cavity and the adjustment cavity, and the accommodating cavity is in communication with the battery cavity.

According to a second aspect, an electronic atomization device is provided, including the battery assembly, and further including an atomizer. The atomizer and the bottom cover are respectively connected to two ends of the battery protection tube.

Beneficial effects of this application are as follows. The battery assembly includes the holder, the battery protection tube, and the bottom cover. The battery core is fixed on the holder, and the battery protection tube is sleeved on the holder. The first buckle part is buckled to the second buckle part, and the bottom cover is in a locked state, to limit the battery protection tube from being separated from the holder and protect the battery core. The first buckle part is separated from the second buckle part, the bottom cover is in an unlocked state, and the bottom cover may be separated from the holder, so that the battery protection tube may be separated from the holder at the bottom cover in a length direction of the holder, and the battery core is exposed. The bottom cover is detachably connected to the holder, the battery core can be removed, and the bottom cover can be switched between the locked state and the unlocked state by provided that the bottom cover is rotated manually, thereby improving convenience of removal.

### BRIEF DESCRIPTION OF THE DRAWINGS

To describe the technical solutions in the embodiments of this application more clearly, the following briefly introduces the accompanying drawings required for describing the embodiments or example technologies. It is clear that the accompanying drawings in the following descriptions show merely some embodiments of this application, and a person of ordinary skill in the art may still derive other accompanying drawings from these accompanying drawings without creative efforts.
FIG. 1 is a schematic three-dimensional structural diagram of an electronic atomization device according to an embodiment of this application;
FIG. 2 is a schematic partial exploded view of the electronic atomization device in FIG. 1;
FIG. 3 is a partially enlarged view of a position A in FIG. 2;
FIG. 4 is a schematic cross-sectional view of the electronic atomization device in FIG. 1 in an axial direction of a battery protection tube;
FIG. 5 is a partially enlarged view of a position B in FIG. 4;
FIG. 6 is a further schematic exploded view of the electronic atomization device in FIG. 2;
FIG. 7 is a schematic three-dimensional structural diagram in a holder of FIG. 6; and
FIG. 8 is a schematic three-dimensional structural diagram of the holder in FIG. 7 from another perspective.

### Reference numerals in the drawings:

100: electronic atomization device; 200: atomizer; 300: battery assembly; 400: battery core; 301: battery protection tube; 3011: placement cavity; 302: holder; 303: bottom cover; 501: buckle head; 502: buckle groove; 5021: first groove section; 5022: second groove section; 503: rotating buckle; 5031: guide surface; 201: suction nozzle housing; 202: air outlet channel; 203: atomization assembly; 600: adjustment base; 601: adjustment sealing plate; 602: operation part; 603: air inlet through hole; 3026: adjustment cavity; 3021: battery cavity; 3022: accommodating cavity; 3023: vent hole; 3024: air inlet hole; 6011: blocking region; 6022: vent groove; and 3031: positioning through hole.

### DETAILED DESCRIPTION

To make the objectives, technical solutions, and advantages of this application clearer and more understandable, this application is further described in detail below with reference to the accompanying drawings and the embodiments. It should be understood that the specific embodiment described herein is only used to explain this application and is not intended to limit this application.

It should be noted that, when a component is described as being "fixed on" or "arranged on" another component, the component may be directly located on the another component, or indirectly located on the another component. When a component is described as being "connected to" another component, the component may be directly connected to the another component, or indirectly connected to the another component. Orientation or position relationships indicated by terms such as "upper", "lower", "left", and "right" are based on orientation or position relationships shown in the accompanying drawings, and are used only for ease of description, rather than indicating or implying that the mentioned apparatus or element needs to have a particular orientation or needs to be constructed and operated in a particular orientation. Therefore, such terms should not be construed as a limitation to this application. A person of ordinary skill in the art may understand the specific meanings of the foregoing terms according to specific situations. Terms "first" and "second" are used merely for the purpose of description, and shall not be construed as indicating or implying relative importance or implying a quantity of technical features. "a plurality of" means two or more, unless otherwise defined clearly and specifically.

With increasing global awareness of sustainability and environmental protection, countries and regions have formulated a series of environmental regulations and policies to reduce adverse environmental impacts of discarded electronic products. As one of the environmental regulations and policies, the European Environmental Protection Act defines requirements for easy disassembling of electronic products with battery cores for consumers. A core objective of this initiative is to promote sustainable lifecycle management of the electronic products and reduce the burden of discarded electronic devices on an environment. Most of existing disposable electronic atomization devices do not have a quick-disassembling function of a battery core. A battery housing needs to be decomposed through a professional means, to remove a battery core. This causes inconvenience for subsequent classification and recovery of the battery core.

To resolve the foregoing problem, the inventor of the present disclosure of this application finally develops a battery assembly through long-term research. A battery core can be mounted on the battery assembly, and when the battery core needs to be removed, the battery core can be removed without using a professional means, thereby improving convenience of removing the battery core.

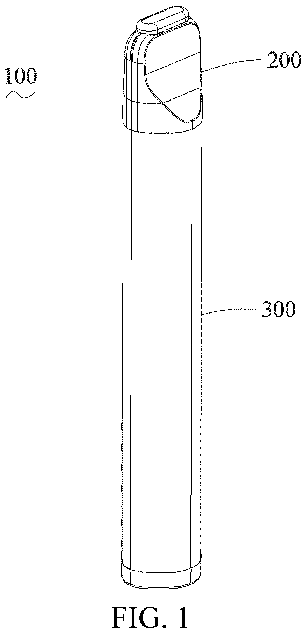

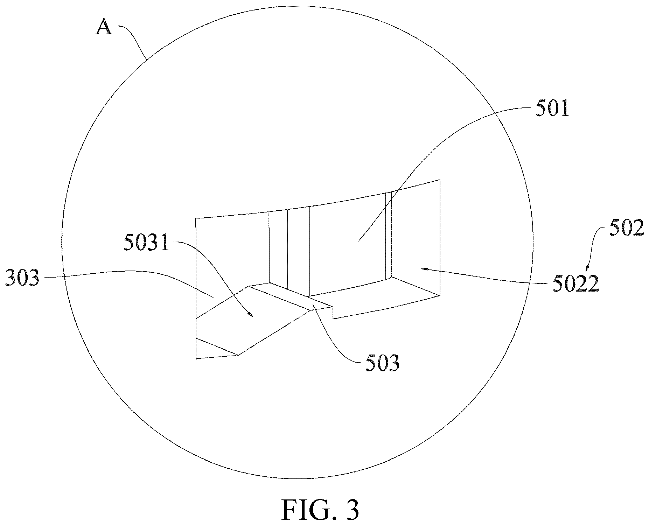

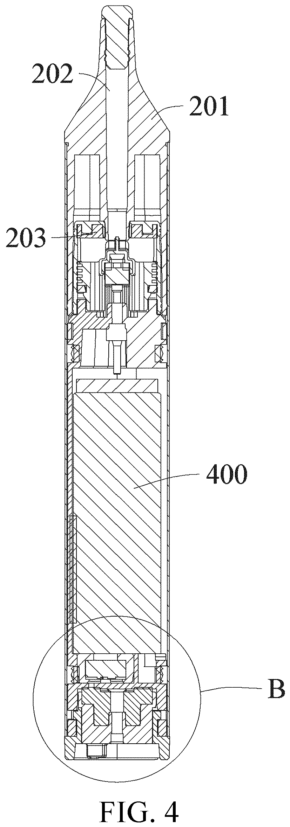

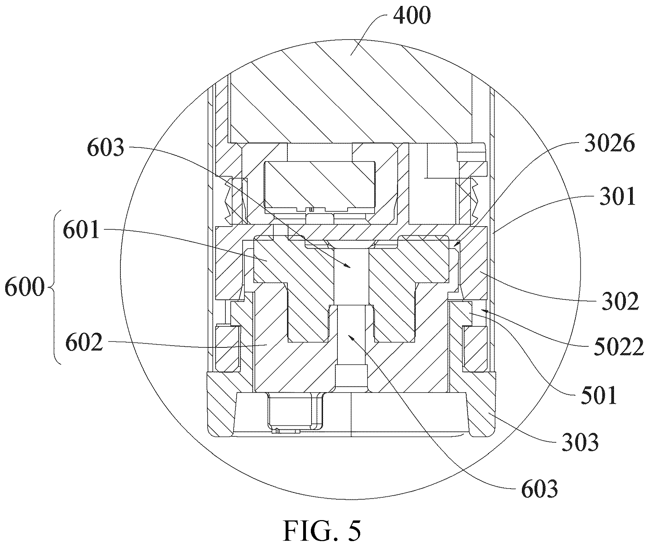

Referring to FIG. 1 to FIG. 7, the embodiments of this application provide a battery assembly 300. A battery core 400 can be mounted on the battery assembly 300, to supply power to an atomizer 200. The battery assembly 300 includes: a holder 302 on which the battery core 400 is mounted, a battery protection tube 301 provided with a placement cavity 3011, and a bottom cover 303 located on one end of the battery protection tube 301. The bottom cover 303 and the atomizer 200 are respectively located on two ends of the battery protection tube 301, and the atomizer 200 is generally fixedly connected to the other end of the battery protection tube 301.

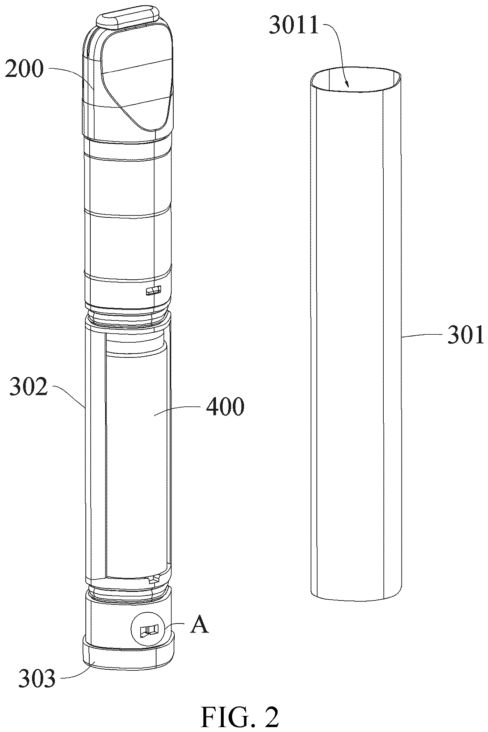

Referring to FIG. 2 to FIG. 5, it may be understood that the holder 302 may be completely accommodated in the placement cavity 3011, or one end of the holder 302 close to the bottom cover 303 is located in the placement cavity 3011, and one end of the holder 302 away from the bottom cover 303 is exposed out of the placement cavity 3011 and is connected to the atomizer 200.

The battery protection tube 301 is slidably sleeved on the holder 302 through the placement cavity 3011 and covers the battery core 400. It may be understood that the battery core 400 is located in the placement cavity 3011, and the battery core 400 can be protected through the battery protection tube 301.

Referring to FIG. 2 to FIG. 5, a first buckle part is arranged on the bottom cover 303, and a second buckle part configured to the first buckle part is arranged on the holder 302. The bottom cover 303 has a locked state and an unlocked state.

Referring to FIG. 2 to FIG. 5, when the bottom cover 303 is in the locked state, the bottom cover 303 is rotated in a forward direction relative to the holder 302, and the first buckle part is in a buckle connection with the second buckle part, to cause the bottom cover 303 to limit the battery protection tube 301 from being separated from the holder 302 at the bottom cover 303, so that the battery protection tube 301 can be stably sleeved on the holder 302, and the battery core 400 can be protected by the battery protection tube 301. It may be understood that the atomizer 200 fixedly arranged on the other end of the battery protection tube 301 prevents the battery protection tube 301 from being separated from the holder 302 at the atomizer 200, and the battery protection tube 301 can be separated from the holder 302 only at the bottom cover 303.

Referring to FIG. 2 to FIG. 5, when the bottom cover 303 is in the unlocked state, the bottom cover 303 is rotated reversely relative to the holder 302, the first buckle part is separated from the second buckle part, the bottom cover 303 may be separated from the holder 302, to release the limitation on the battery protection tube 301, and the battery protection tube 301 may be separated from the holder 302 at the bottom cover 303 in a length direction of the holder 302, to expose the battery core 400, so that the battery core 400 is easily removed from the holder 302, thereby improving convenience of removing the battery core 400.

The battery assembly 300 provided in this application includes the holder 302, the battery protection tube 301, and the bottom cover 303. The battery core 400 is fixed on the holder 302, and the battery protection tube 301 is sleeved on the holder 302. The first buckle part is buckled to the second buckle part, and the bottom cover 303 is in the locked state, to limit the battery protection tube 301 from being separated from the holder 302 and protect the battery core 400. The first buckle part is separated from the second buckle part, the bottom cover 303 is in the unlocked state, and the bottom cover 303 may be separated from the holder 302, so that the battery protection tube 301 may be separated from the holder 302 at the bottom cover 303 in a length direction of the holder 302, and the battery core 400 is exposed. The bottom cover 303 is detachably connected to the holder 302, the battery core 400 can be removed, and the bottom cover 303 can be switched between the locked state and the unlocked state provided that the bottom cover 303 is rotated manually, thereby improving convenience of removal.

Referring to FIG. 2 to FIG. 5, it may be understood that the bottom cover 303 needs to be rotated by a specific angle, to separate the first buckle part and the second buckle part, so that the battery assembly 300 further has a child lock function, and a child cannot easily unplug the bottom cover 303 from the holder 302 to expose the battery core 400, thereby improving security of the battery assembly 300.

Referring to FIG. 2 to FIG. 5, optionally, a rotation angle of the bottom cover 303 relative to the holder 302 may be three radians, five radians, or 10 radians. This is not limited herein and may be selected according to an actual situation.

It may be understood that a battery cavity 3021 is provided on the holder 302, and the battery core 400 is at least partially fixed in the battery cavity 3021.

Optionally, one of the first buckle part and the second buckle part is a buckle head, and the other of the first buckle part and the second buckle part is a buckle groove configured to the buckle head. In other words, the first buckle part is the buckle groove provided on the bottom cover 303, and the second buckle part is the buckle head protruding on the holder 302 and configured to the buckle groove, or the first buckle part is the buckle head protruding on the bottom cover 303, and the second buckle part is the buckle groove provided on the holder 302 and configured to the buckle head. This is not limited herein and may be selected according to an actual situation.

In this embodiment, the first buckle part is a buckle head 501 protruding on the bottom cover 303, and the second buckle part is a buckle groove 502 provided on the holder 302.

Optionally, the holder 302 is completely accommodated in the placement cavity 3011, a part of the bottom cover 303 is inserted into the placement cavity 3011, and the other part of the bottom cover 303 is exposed out of the placement cavity 3011 and abuts against and limits the battery protection tube 301. Rotation of the bottom cover 303 can implement buckling or separation between the buckle groove and the buckle head, to switch the bottom cover 303 between the locked state and the unlocked state.

Optionally, the first buckle part and the second buckle part are arranged in pairs. In some embodiments, two pairs of first buckle parts and two pairs of second buckle parts are respectively arranged, and the two first buckle parts are symmetrically arranged on the bottom cover 303.

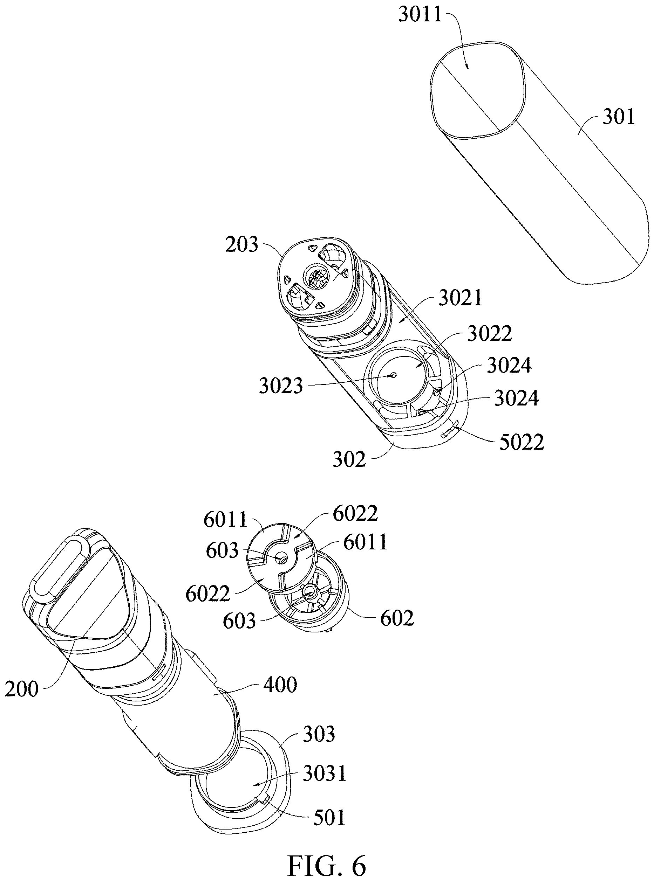

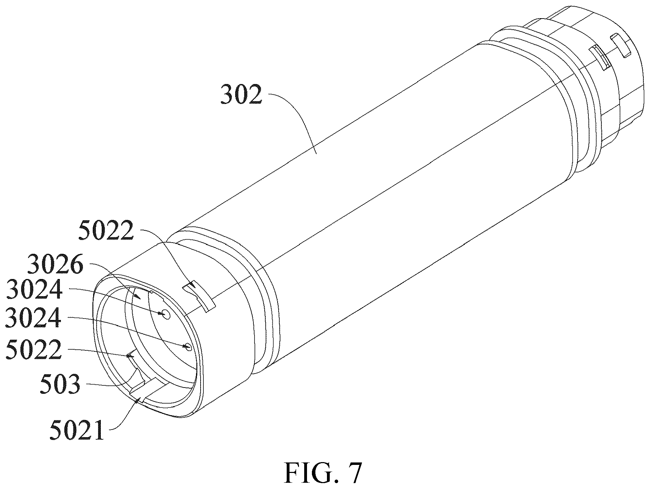

Referring to FIG. 6 and FIG. 7, in some embodiments, the buckle groove 502 includes a first groove section 5021 provided in an axial direction of the battery protection tube 301 and a second groove section 5022 in communication with the first groove section 5021 and provided in a circumferential direction of the battery protection tube 301, and the first groove section 5021 guides the buckle head 501 to be buckled to the second groove section 5022.

Referring to FIG. 6 and FIG. 7, optionally, the first buckle part first slides into the first groove section 5021 in an insertion direction in which the bottom cover 303 is inserted into the placement cavity 3011. After the bottom cover 303 is inserted in place, the first buckle part is located at a position at which the first groove section 5021 is in communication with the second groove section 5022. The bottom cover 303 is rotated by a specific angle relative to the holder 302, and the first buckle part slides into the second groove section 5022. Because an extending direction of the second groove section 5022 and an extending direction of the first groove section 5021 are staggered, the buckle groove 502 is arranged in an L shape as a whole, so that after the first buckle part is buckled to the second groove section 5022, the bottom cover 303 cannot be unplugged from the holder 302 in the axial direction of the battery protection tube 301.

Referring to FIG. 6 and FIG. 7, in some embodiments, a rotating buckle 503 further protrudes on a groove wall of the second groove section 5022, and the first buckle part is clamped between the rotating buckle 503 and the groove wall of the second groove section 5022.

Referring to FIG. 6 and FIG. 7, optionally, a rotating buckle 503 protrudes on a groove wall of the second groove section 5022 and faces the second groove section 5022. The rotating buckle 503 is configured to limit a position of the first buckle part in the second groove section 5022, to avoid loosening of the bottom cover 303, causing the first buckle part to be separated from the second groove section 5022. Only after a proper torque is applied to the bottom cover 303, the second buckle part can be driven to be separated from the second groove section 5022, to improve reliability of the bottom cover 303.

In some embodiments, a guide surface 5031 is arranged on the rotating buckle 503. Optionally, the guide surface 5031 is inclined away from the position at which the first groove section 5021 is in communication with the second groove section 5022, so that the first buckle part can be guided to be slidably buckled between the rotating buckle 503 and the groove wall of the second groove section 5022, to improve convenience of buckling of the first buckle part.

Referring to FIG. 6 and FIG. 7, in some embodiments, an adjustment cavity 3026 is provided on one end of the holder 302 close to the bottom cover 303. The buckle groove 502 is provided on a cavity wall of the adjustment cavity 3026, a part of the bottom cover 303 is inserted into the adjustment cavity 3026, the first buckle part and the second buckle part are located in a circumferential direction of the adjustment cavity 3026, and a plurality of air inlet holes 3024 in communication with the placement cavity 3011 are provided on a bottom wall of the adjustment cavity 3026. The battery assembly 300 further includes an adjustment base 600 located in the adjustment cavity 3026. The adjustment base 600 is rotated by a first predetermined angle relative to the holder 302 to expose at least one of the air inlet holes 3024, or the adjustment base 600 is rotated by a second predetermined angle relative to the holder 302 to block all the air inlet holes 3024.

It may be understood that external air may enter the atomizer 200 through the air inlet hole 3024. After the adjustment base 600 is rotated by the first predetermined angle, one or two air inlet holes 3024 may be exposed, other air inlet holes 3024 are in a blocked state, and the air inlet holes 3024 in the blocked state do not allow the air to pass. Quantities of exposed air inlet holes 3024 are different, amounts of air entering the battery assembly 300 within unit time are also different, and different inhalation resistance may be formed.

Optionally, the first predetermined angle or the second predetermined angle may be 3 degrees, 10 degrees, or 30 degrees. This is not limited herein and may be selected according to an actual situation.

In some embodiments, cross-sectional areas of the air inlet holes 3024 are all different. When one of the air inlet holes 3024 is selected to conduct the external space and the atomizer 200 and other air inlet holes 3024 are all in the blocked state, in a case of a same inhalation force, air flows passing through the air inlet holes 3024 of different cross-sectional areas within unit time are different, inhalation resistance of the air inlet hole 3024 with a large cross-sectional area is small, and inhalation resistance of the air inlet hole 3024 with a small cross-sectional area is large, so that a plurality of different inhalation resistance may be formed, and a user may select different inhalation resistance during inhalation, thereby improving user experience.

Referring to FIG. 6 and FIG. 7, optionally, a shape of the air inlet hole 3024 may be a round, an ellipse, or a polygon, and may be selected according to an actual situation. This is not limited herein. In this embodiment, the shape of the air inlet hole 3024 is a round. In another embodiment, the shape of the air inlet hole 3024 may alternatively a polygon.

Referring to FIG. 6 and FIG. 7, in some embodiments, an accommodating cavity 3022 and a microphone located in the accommodating cavity 3022 are further provided on the holder 302, the accommodating cavity 3022 and the adjustment cavity 3026 are provided oppositely, a vent hole 3023 is further provided on the bottom wall of the adjustment cavity 3026, and two ends of the vent hole 3023 are in communication with the adjustment cavity 3026 and the accommodating cavity 3022 respectively. The adjustment base 600 is rotated by the first predetermined angle relative to the holder 302 to expose at least one of the air inlet holes 3024, and the adjustment base 600 does not block the vent hole 3023, or the adjustment base 600 is rotated by the second predetermined angle relative to the holder 302, and the adjustment base 600 blocks each air inlet hole 3024 and the vent hole 3023.

Referring to FIG. 6 and FIG. 7, it may be understood that the microphone is an air pressure sensor. A main function of the air pressure sensor is to detect inhalation of a user and trigger the atomizer 200 to operate during inhalation. This means that the user can start the atomizer 200 through inhalation without pressing a button or switch, which improves use convenience of the atomizer 200.

It may be further understood that in this embodiment, two air inlet holes 3024 are provided. Both one of the air inlet holes 3024 and the vent hole 3023 are in communication the external space, or each air inlet hole 3024 and the vent hole 3023 are blocked by the adjustment base 600, and the atomizer 200 cannot operate, so that the battery assembly 300 has a mechanical child lock function, to improve security.

Referring to FIG. 6 and FIG. 7, in some embodiments, a positioning through hole 3031 running through two side end surfaces of the bottom cover 303 is provided on the bottom cover 303. The adjustment base 600 is partially rotatably arranged in the positioning through hole 3031. An air inlet through hole 603 in communication with an external space is provided on the adjustment base 600, an air inlet groove is provided on a surface of the adjustment base 600 facing the air inlet hole 3024, and the air inlet through hole 603 is in communication with the air inlet groove. The adjustment base 600 is rotated by a predetermined angle relative to the bottom cover 303 for at most one of the air inlet holes 3024 and the vent hole 3023 to be in communication with the air inlet groove.

Referring to FIG. 6 and FIG. 7, optionally, the adjustment base 600 includes an adjustment sealing plate 601 made of a silicone material and an operation part 602 connected to the adjustment sealing plate 601 and configured to operate the adjustment sealing plate 601. The adjustment sealing plate 601 is located in the adjustment cavity 3026, one end of the operation part 602 is connected to the adjustment sealing plate 601, the other end of the operation part 602 is located in the positioning through hole 3031 and is operated by hands, and a knob for hands to turn the operation part 602 further protrudes on the operation part 602.

Optionally, a status indication mark is further arranged on a hole edge of the positioning through hole 3031. The status indication mark is configured to mark a conduction or blocking situation of the air inlet hole 3024 and the vent hole 3023.

Referring to FIG. 6 and FIG. 7, optionally, a part of a surface of the adjustment sealing plate 601 facing the air inlet hole 3024 and the vent hole 3023 is recessed to form an air inlet groove, and the other surface forms a blocking region 6011. The adjustment sealing plate 601 is rotated, and different positions of the air inlet groove or the blocking region 6011 relative to the air inlet hole 3024 may be adjusted, so that different inhalation resistance may be formed.

Referring to FIG. 6 and FIG. 7, it may be understood that three or more air inlet holes 3024 may alternatively be provided, and cross-sectional areas of the air inlet holes 3024 are all different, so that three or more inhalation resistance is formed, thereby improving user experience.

Optionally, a plurality of air inlet grooves and/or blocking regions 6011 may be provided. Both air inlet holes 3024 are in direct communication with the battery cavity 3021, but are not in direct communication with the accommodating cavity 3022.

It may be understood that the adjustment sealing plate 601 is squeezed by the operation part 602 in the adjustment cavity 3026, and is elastically deformed slightly. Therefore, when the air inlet hole 3024 and/or the vent hole 3023 is located in the blocking region 6011, the blocking region 6011 may seal the air inlet hole 3024 and the vent hole 3023, to prevent a minor from using the device.

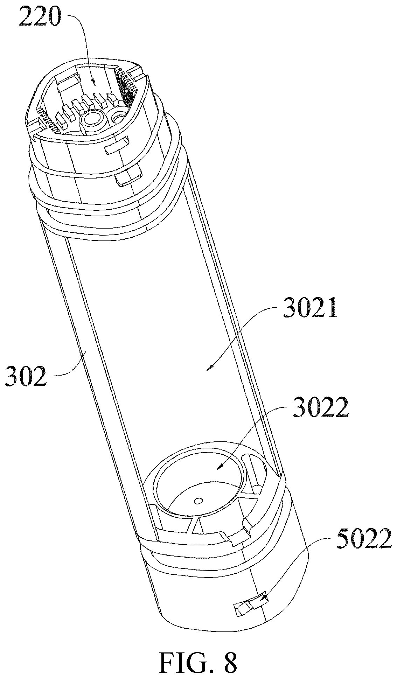

Referring to FIG. 7 and FIG. 8, in an embodiment, an atomization cavity 220 is further provided on the holder 302. The atomization cavity 220 and the adjustment cavity 3026 are respectively located on two ends of the holder 302, the battery cavity 3021 is located between the atomization cavity 220 and the adjustment cavity 3026, and the accommodating cavity 3022 is in communication with the battery cavity 3021, so that each element is properly mounted on the holder 302, and a space and a structure of the holder 302 are fully utilized.

Referring to FIG. 1, the present disclosure further provides an electronic atomization device 100. The electronic atomization device 100 includes the battery assembly 300. For a specific structure of the battery assembly 300, reference may be made to the foregoing embodiments. Because the electronic atomization device 100 adopts all the technical solutions of the foregoing embodiments, the electronic atomization device 100 also has all beneficial effects brought by the technical solutions of the foregoing embodiments. Details are not described herein again.

In some embodiments, the electronic atomization device 100 further includes the atomizer 200 and the battery core 400. The atomizer 200 and the bottom cover 303 are respectively connected to two ends of the battery protection tube 301. The battery core 400 is located in the battery protection tube 301 and is connected to the holder 302.

Referring to FIG. 7 and FIG. 8, the atomizer 200 includes an atomization assembly 203 and a suction nozzle housing 201 having a liquid storage cavity. The atomization assembly 203 is arranged on one end of the holder 302 away from the bottom cover 303, and the atomization assembly 203 is connected to the holder 302 to form the atomization cavity 220. It may be understood that a part of the atomization cavity 220 is limited by the holder 302, and the other part of the atomization cavity 220 is limited by the atomization assembly. An air outlet channel 202 passing through the liquid storage cavity is further provided on the suction nozzle housing 201.

The foregoing descriptions are merely optional embodiments of this application, and are not intended to limit this application. For a person skilled in the art, various modifications and variations can be made to this application. Any modification, equivalent replacement, improvement, or the like made within the spirit and principle of this application shall fall within the scope of the claims of this application.

## Claims

1. A battery assembly to mount a battery core, comprising:
a holder configured to mount the battery core;
a battery protection tube; and
a bottom cover located on one end of the battery protection tube,
wherein the battery protection tube is sleeved on the holder and covers the battery core,
wherein a first buckle part is arranged on the bottom cover, and a second buckle part configured to the first buckle part is arranged on the holder, and
wherein the bottom cover is rotatable relative to the holder, so that the first buckle part is in a buckle connection with the second buckle part, or the first buckle part is separated from the second buckle part.

2. The battery assembly of claim 1, wherein one of the first buckle part and the second buckle part is a buckle head, and another of the first buckle part and the second buckle part is a buckle groove configured to the buckle head.

3. The battery assembly of claim 2, wherein the first buckle part is the buckle head protruding on the bottom cover, the second buckle part is the buckle groove provided on the holder,
wherein the buckle groove comprises a first groove section provided in an axial direction of the battery protection tube and a second groove section in communication with the first groove section and provided in a circumferential direction of the battery protection tube, and
wherein the first groove section is configured to guide the buckle head to be buckled to the second groove section.

4. The battery assembly of claim 3, wherein a rotating buckle protrudes on a groove wall of the second groove section, and
wherein the first buckle part is clamped between the rotating buckle and the groove wall of the second groove section.

5. The battery assembly of any one of claims 1 to 4, wherein an adjustment cavity is provided on the holder, and the first buckle part and the second buckle part are located in a circumferential direction of the adjustment cavity,
wherein a plurality of air inlet holes are provided on a bottom wall of the adjustment cavity,
wherein the battery assembly further comprises an adjustment base located in the adjustment cavity, and
wherein the adjustment base is configured to rotate by a first predetermined angle relative to the holder to expose at least one air inlet hole of the plurality of air inlet holes, or the adjustment base is configured to rotate by a second predetermined angle relative to the holder to block each air inlet hole of the plurality of air inlet holes.

6. The battery assembly of claim 5, wherein cross-sectional areas of each air inlet hole are all different.

7. The battery assembly of claim 5, wherein an accommodating cavity and a microphone located in the accommodating cavity are provided on the holder,
wherein the accommodating cavity and the adjustment cavity are provided oppositely,
wherein a vent hole is provided on the bottom wall of the adjustment cavity, and two ends of the vent hole are in communication with the adjustment cavity and the accommodating cavity, respectively, and
wherein the adjustment base is configured to rotate by the first predetermined angle relative to the holder to expose at least one air inlet hole of the plurality of air inlet holes, and the adjustment base does not block the vent hole, or the adjustment base is configured to rotate by the second predetermined angle relative to the holder to block each air inlet hole and the vent hole.

8. The battery assembly of claim 7, wherein a positioning through hole running through two side end surfaces of the bottom cover is provided on the bottom cover, and the adjustment base is at least partially rotatably arranged in the positioning through hole,
wherein an air inlet through hole in communication with an external space is provided on the adjustment base, an air inlet groove is provided on a surface of the adjustment base facing the air inlet hole, and the air inlet through hole is in communication with the air inlet groove, and
wherein the adjustment base is configured to rotate by a predetermined angle relative to the bottom cover for at most one of the plurality of air inlet holes and the vent hole to be in communication with the air inlet groove.

9. The battery assembly of claim 7, wherein an atomization cavity and a battery cavity configured to mount the battery core are provided on the holder,
wherein the atomization cavity and the adjustment cavity are respectively located on two ends of the holder,
wherein the battery cavity is located between the atomization cavity and the adjustment cavity, and
wherein the accommodating cavity is in communication with the battery cavity.

10. An electronic atomization device, comprising:
the battery assembly of any one of claims 1 to 9; and
an atomizer,
wherein the atomizer and the bottom cover are respectively connected to two ends of the battery protection tube.
